# EUROPEAN PATENT APPLICATION

(11) **EP 2 587 573 A1**
(43) Date of publication of application: **01.05.2013**
(21) Application number: 10853692.1
(22) Date of filing: 25.06.2010
(51) Int. Cl.: H01M 4/66, H01M 4/36, H01M 4/48

(54) **ELECTRODE COLLECTOR MATERIAL AND PRODUCTION METHOD FOR SAME**

(71) Applicant: Shimizu, Kanji, Kobe-shi, Hyogo 651-2114 (JP); Japan Silicon Electronics Technology Inc., Tokyo 105-0001 (JP); Enzo Planning Co., Ltd., Tokyo 150-0011 (JP); Takanashi, Kazuhiko, Tokyo 166-0003 (JP)
(72) Inventor: SHIMIZU, Kanji, Kobe-shi, Hyogo 651-2114 (JP)
(74) Representative: Grünecker, Kinkeldey, Stockmair & Schwanhäusser
(86) International application number: PCT/JP2010/060915
(87) International publication number: WO 2011/161832

(57) **Abstract**

The present invention provides a method and so on for manufacturing an electrode collector which enables rapid charge and discharge and can be used in battery or capacitor electrodes. The invention is directed to an electrode collector that has fine titanium oxide particles having a large specific surface and surface-modified by means of an organic liquid metal such as vanadium, and to a method for manufacturing the same. This electrode collector can implement a collector with excellent rapid charge and discharge for use in batteries and capacitors. The fine titanium oxide particles may have an anatase-type crystal structure. These electrode collectors can be used as electrodes, lithium-ion batteries and capacitors.

## Description

### TECHNICAL FIELD

The present invention relates to electrode collector material for use as electrodes in lithium-ion batteries and electric double-layer capacitors (, electrodes using this electrode collector material, lithium-ion batteries or capacitors,) to enable rapid charge and discharge, and a method for manufacturing the same.

### BACKGROUND ART

As rechargeable secondary batteries, lithium-ion batteries, electric double-layer capacitors, super capacitors and the like have been used in various electronic equipment. As lithium-ion batteries are easy to be downsized and decreased in weight, they have been extensively used in electronic equipment, such as laptop computers and mobile terminals. Capacitors have been used for a start-up electric power source in copying machines, street lights with solar batteries and the like. For electrodes for use in lithium-ion batteries and capacitors (including various capacitors supplying electric power, such as super-capacitors, electric double-layer capacitors and hybrid capacitors), often used is carbon material.

Secondary batteries capable of charging and discharging may be used not only for distributed power supplies in mobile devices, such as laptop computers, cameras and mobile terminals, but also for leveling electric power in electric generators or system power sources, such as on-vehicle batteries and UPS power supplies. In either use, secondary batteries are preferred which have sufficient capacity and can be charged and discharged in a short time (rapid charge and discharge). However, the former often requires, among others, large capacity and the latter requires, among others, a rapid charging and discharging characteristic.

There are various kinds of batteries. When organic-based electrolyte is used, the electromotive force is higher than using aqueous solution-based electrolyte, which tends to attain a high energy density. Commonly used, among the secondary batteries using organic-based electrolyte, are a lithium-ion battery and a capacitor.

The lithium-ion battery utilizes an oxidation-reduction reaction as a battery function, in which lithium ions are transferred between the positive and negative electrodes via electrolyte when charging and discharging. As a material for the negative electrode of the lithium-ion battery, carbon-based material, such as graphite, is of general use, and also tin oxide, vanadium oxide and silicon have been examined. For the positive electrode, cobalt oxide and manganese oxide have been used.

By contract, the capacitor has its essential function of forming electric double layers, which is of non-Faraday's reaction on the electrode surface boundary together with oxidation-reduction reaction on the electrode utilized as an additional pseudo-capacitance. As an electrode collector of the capacitor, porous carbon, such as activated carbon, is of general use.

Now, for the negative electrode in the lithium-ion battery, graphite is often used. The lithium-ion battery generates current by means of oxidation-reduction reaction caused by lithium ions intruding into and removing from the electrode. However, the electrode using graphite had difficulty in miniaturizing particles to reduce the ion diffusion time, and thus was difficult to achieve rapid charge and discharge.

As electrode collectors for capacitors, activated carbon, which has large specific surface area, is used in order to increase the capacitance. However, since the crystal structure of activated carbon is often amorphous so that the electro-conductivity is low, it was necessary to add auxiliary conductive agent thereto, such as carbon powder. Alternatively, the electrode is adapted to have its active layer thinned to reduce resistance between the positive and negative electrodes as well. For example, it has been proposed that an active substance of nanometer in particle size is used to shorten the ion diffusion distance in the active substance, and/or an electrode having its specific surface area increased to enlarge the surface area of the active substance to be exposed to electrolyte.

In view of the above, various proposals have been made for an electrode collector, taking carbonmaterial as an example. (For example, refer to patent documents 1, 2 and 3).

### PRIOR ART DOCUMENTS

### PATENT DOCUMENTS

Patent Documents 1, 2 and 3: Japanese patent laid-open publication Nos. 2003-92235, 2004-103669, and 2008-16456, respectively.

### SUMMARY OF THE INVENTION

### PROBLEM(S) TO BE SOLVED BY THE INVENTION

Either solution proposed therein suggests various improvements based on carbon material.
However, although the electro-conductivity is improved by adding an auxiliary conductive agent, it is difficult to attain drastically rapid charge and discharge. Moreover, addition of an auxiliary conductive agent involves a problem of increasing the cost and steps of manufacturing.

Conventionally, electronic equipment using lithium-ion batteries or electric double-layer capacitors has often required a little electric current.
In recent years, however, use of secondary batteries with larger current required is increasing not only in electronic equipment but in, for example, motive energy of automobiles and tools. Various solutions proposed so far are all directed to improvements based on carbon material, and do not solve the difficulties in simultaneously satisfying the requirements for high speed oxidation-reduction reaction and rapid charge and discharge that are required for the electrodes of lithium-ion batteries and the requirements for the specific surface area and electro-conductivity that are required for the electrodes of electric double-layer capacitors.
In addition, when the secondary batteries are used for leveling electric power in generators or system power sources like in case of on-vehicle batteries or UPS power supplies, rapid charge and discharge are required.

However, the prior art and the proposed solutions are not sufficient in terms of rapid charge and discharge.

As described above, in the prior art, nothing has been proposed for an electrode collector which attains rapid charge and discharge and has its specific surface area ensuring its large storage capacity and electro-conductivity.

It is an object of the present invention to provide an electrode collector material, which enables rapid charge and discharge and has a large electric storage capacity, for use as electrodes in both lithium-ion batteries and electric double-layer capacitors, and to provide an electrode, a lithium-ion battery, an electric double-layer capacitor, and a method of manufacturing an electrode collector material.

In the application, an electric double-layer capacitor is taken as an example, but the invention covers various kinds of capacitors, such as a hybrid capacitor and a super-capacitor. Hereafter, when a capacitor is referred to in the description, it covers various kinds of capacitors, such as an electric double-layer capacitor, a hybrid capacitor and a super-capacitor.

### MEASURES TO SOLVE THE PROBLEM(S)

In view of achieving the aforementioned objects, the present invention is characterized by electrode collector material including fine titanium oxide particles having a large specific surface area and surface-modified by means of organic liquid metal, such as vanadium, and a method for manufacturing the same, an electrode, a lithium-ion battery, and a capacitor that use said electrode collector material.

### ADVANTAGES OF THE INVENTION

In accordance with the present invention, an electrode collector material can be obtained which is improved in electro-conductivity while the large specific surface area of titanium oxide as titanium oxide nanoparticles is maintained and thus the large double-layer capacitance required by a capacitor is ensured while leaving some spaces for receiving lithium ions and at the same time having a high electro-conductivity. As a result, an electrode collector for lithium-ion batteries and an electrode collector which can be used as an electrode collector for capacitors can be obtained.

Further, the electrode collector in accordance with the invention can be used for electrodes in lithium-ion batteries and capaci tors without the need of an auxiliary conductive agent, such as carbon powders.

Still further, depending upon the requirements for improving the electro-conductivity, an electrode collector to be manufactured is adaptable such that its characteristics can be optimized for the electrodes of lithium-ion batteries and also for electrodes of capacitors.

### BEST MODE FOR IMPLEMENTING THE INVENTION

The present invention is directed to electrode collector material including fine titanium oxide particles having a large specific surface area and surface-modified with metal or fine metal oxide by means of organic liquid metal. In the following, preferred embodiments of the invention will be described with reference to the drawings.

### EMBODIMENT 1

With an electrode collector in accordance with Embodiment 1 of the present invention, a chemical compound is used in which fine titanium oxide particles having a large specific surface area are surface-modified by means of organic liquid metal, such as vanadium.

With that structure it is possible to implement an electrode collector which has a specific surface area attaining large double-layer capacitance and the capability of receiving and releasing lithium ions as well as a high electro-conductivity.

As described in connection with the prior art, development of an electrode collector to be used in lithium-ion batteries and capacitors have been called for. In order to meet a wider range of social needs, carbon material, when used as a base, would not entirely meet the needs, and therefore a substance other than carbon material should be regarded as a starting material.
As a prerequisite, it is pointed out that, in order to be rendered used as electrodes for lithium-ion batteries, a battery function and rapid charge and discharge by the reaction of intrusion and removal of lithium ions that involves oxidation-reduction reaction should be developed, and, in order to be allowed for use as electrodes in capacitors, the specific surface area should be larger so as to attain large storage capacity.
In addition, in order to accomplish rapid charge and discharge, those are subjected to a condition that the electrode collector can be designed to have its internal resistance small.

It will be described why fine titanium oxide particles have been selected.

### Selection of a starting substance

[1] For this, a starting substance has to meet the requirements that
(1) its specific surface area is larger,
(2) it has or can have electro-conductivity, and
(3) it has the capability of receiving and releasing lithium ions.
From such a starting substance, it is an ultimate object to obtain an electrode collector having large capacitance and capable of rapid charging and discharging.

The inventor has selected titanium oxide (fine titanium oxide particles) having a large specific surface area as a substance for use as electrodes in a lithium-ion battery having the charging and discharge capability because the titanium oxide, as seen from the fact that it is used as photocatalysis, has its large specific surface area. Further, fine titanium oxide particles have been known for their ability to charge and discharge electricity for an electrode of lithium-i on batteries . In addition, fine titanium oxide particles are easily available because of their variety of applications and have a good cost performance for electrode collectors as well.

Although tine titanium oxide particles per se is not electrically conductive, they come to have the high electro-conductivity when surface-modified with metallization.

The inventor has come to a conclusion to select fine titanium oxide particles as a starting substance of an electrode collector in accordance with the present invention that satisfies requirements (1) (2) and (3) and is superior in cost and manufacturing.

### [2] Development from a starting substance to an electrode collector

However, simple modification of fine titanium oxide particles in electro-conductivity would cause difficulties in producing an electrode collector having well-balanced properties, such as a large specific surface area sufficient to ensure double-layer capacitance and an electro-conductivity.

Thus, a limitative modification of the electro-conductivity has been examined while maintaining the capability of receiving and releasing lithium ions and the large specific surface area that are the properties specific to fine titanium oxide particles. This is because it is considered that the limitative modification of the electro-conductivity brings about an electro-conductivity and that an electrode collector is implemented which has its higher charge and discharge efficiency and more rapid charging and discharging capability due to its reduced internal resistance.
Thus, the fine titanium oxide particles can be formed into particles having the large specific surface area. Therefore, the electro-conductivity attained by improving the conductivity with that form maintained can implement an electrode collector of a capacitor having its larger specific surface area.
In this regard, whenmodifying the electro-conductivity by means of fine titanium oxide particles having the large specific surface area as a starting substance, it is important to conduct the conductivity modification process with the structure of the fine titanium oxide particles being controlled (while maintaining the specific surface area).

The electrode reactions in the lithium-ion battery and the capacitor can simultaneously be involved as reactions for supplementing each other in their capacitances (redox capacitor electrode, super-capacitor electrode).
In this way, by subjecting the fine titanium oxide particles to a limitative modification of the electro-conductivity with the fine particle structure of titanium oxide controlled, it is possible for the lithium-ion battery electrode to be imparted with double-layer capacitance by means of a high specific surface area, and for the capacitor electrode to be imparted with the capacitance for receiving and releasing lithium ions.
That makes it understandable that, by subjecting the fine titanium oxide particles as a starter material to the limitative modification of the electro-conductivity while (A) maintaining the capability of receiving and releasing lithium ions, (B) controlling the structure of the starter material having its high specific surface area and (C) controlling the provision of the electro-conductivity, it is possible to obtain an intended electrode collector as well as to accomplish a high charging and discharging efficiency and a more rapid charging and discharging property.

With lithium-ion batteries, while being charged, the positive electrode releases lithium ions and is thus oxidized. The negative electrode receives lithium ions and is thus reduced. While being discharged, the positive electrode receives lithium ions and is thus reduced. The negative electrode releases lithium ions and is thus oxidized. This oxidation and reduction causes current to flow.

When electrons are transferred between the electrode-activating substance and the external circuit in charging and discharging, the electrode, if low in electro-conductivity, works as resistance itself. Therefore, the electrode material is preferably high in electric electro-conductivity. This is equally the case with lithium-ion batteries and capacitors.

In addition, capacitors are preferable if the ability of absorbing ions is high so as to store electrons accordingly. It is therefore suitable that the electrode collector has its larger specific surface area. Further, it is preferable for lithium-ion batteries to have many pores exposed to electrolyte to receive lithium ions and the shorter diffusion distance of ions in the electrode. It is thus suitable that the electrode collector has its large specific surface area.

Since lithium-ion batteries and capacitors have such a structure, they require a specific surface area such as to increase electrons being attracted, the capability of charge and discharge of lithium ions (caused by oxidation-reduction reaction) and the electro-conductivity between the electrodes and the electrode collector.

### EMBODIMENT 2

In the electrode collector of Embodiment 2, the fine titanium oxide particles have an anatase-type crystal structure in addition to the structure of Embodiment 1.

With this structure, fine titanium oxide particles having a large specific surface area can be used as a base, and as the result an electrode collector having a large specific surface area can be implemented.

With this structure, the fine titanium oxide particles are activated for their surface by metallization while the specific surface area of the fine titanium oxide particles is maintained.

### EMBODIMENT 3

In the electrode collector of Embodiment 3, the fine titanium oxide particles are mixed with organic liquid metal and dried. Thereafter, they are encapsulated into a heating furnace to remove organic constituents for modification.
The remaining features accord to the aforementioned embodiments, on which a repetitive description will be refrained from.

The electrode collectors, electrodes, lithium batteries, capacitors and the method of manufacturing the electrode collector that have been described so far are mere examples for describing the gist of the present invention, and may cover modifications and change without departing from the gist of the invention.

## Claims

1. An electrode collector material comprising fine titanium oxide particles having a large specific surface area and surface-modified with metal or fine metal oxide by means of organic liquid metal, such as vanadium.

2. The electrode collector material in accordance with claim 1, wherein the fine titanium oxide particles have an anatase-type crystal structure.

3. An electrode comprising the electrode collector material used in accordance with either of claims 1 to 2.

4. A lithium-ion battery comprising the electrode collector material used in accordance with claim 3.

5. A capacitor comprising the electrode collector material used in accordance with claim 3.

6. A method for manufacturing electrode collector material, wherein fine titanium oxide particles having a large specific surface area are surface-modified by means of organic liquid metal, such as vanadium.
